# EUROPEAN PATENT SPECIFICATION

(11) **EP 0 810 826 B1**
(45) Date of publication and mention of the grant of the patent: **11.06.2003**
(21) Application number: 96906523.4
(22) Date of filing: 20.02.1996
(51) Int. Cl.: A23D 7/00

(54) **PROCESS FOR REDUCING STEROLS AND FREE FATTY ACIDS FROM ANIMAL FAT**
VERFAHREN ZUR VERRINGERUNG DES GEHALTES AN STEROL UND FREIEN FETTSÄUREN IN TIERISCHEM FETT
PROCEDE ABAISSANT LA TENEUR EN STEROLS ET ACIDE GRAS LIBRES DES GRAISSES ANIMALES

(30) Priority: 22.02.1995 US 392361
(43) Date of publication of application: 10.12.1997
(73) Proprietor: Cerestar USA, Inc., Portland, Maine 04101 (US)
(72) Inventor: Ritter, Chris, Shawnee, KS 66226 (US); Sikorski, Christopher, Whiting, IN 46394 (US); Shieh, Wen, Crown Point, IN 46307 (US); Hedges, Allan, Crown Point, IN 46307 (US)
(74) Representative: Portal, Gérard
(86) International application number: PCT/US96/02194
(87) International publication number: WO 96/025858

(56) References cited:
- DE-A- 4 221 229
- US-A- 5 223 295
- US-A- 5 232 725

## Description

This invention relates to a process for reducing sterols and free fatty acids from animal fat through the use of cyclodextrins.

### Prior Art

Studies have linked cholesterol with increased rates of heart disease and certain types of cancer. As a result of these findings there has been a demand in the consumer and food industry for reduced cholesterol foods. For example, animal fats such as tallow and lard have fallen into disfavor as cooking oils and food ingredients due, in part, to their cholesterol content. Cholesterol free vegetable oils have displaced animal fats in a variety of applications. An animal fat with reduced cholesterol content should improve consumer perception of these products and allow them to compete more effectively against vegetable oils in the marketplace.

It is known that both sterols and free fatty acids form complexes with cyclodextrin and that this complexation phenomenon can be used to remove sterols/free fatty acids from a foodstuff. It is also known that the efficiency of the complexation process is greatly increased when the complexation reaction occurs in the presence of water, e.g. water is added to the foodstuff along with the cyclodextrin. Further, it is known that these complexes can be separated from the foodstuff by centrifugation, thereby reducing the sterols/free fatty acids content of treated material. See U.S. Patent
Nos. 5,232,725 and 3,491,132.

The '725 patent is directed to reducing the content of sterols/free fatty acids in an animal fat; and teaches forming an oil-in-water emulsion from an aqueous slurry of cyclodextrin and liquefied animal fat. The '725 patent teaches that vigorous stirring must be employed in order to form the emulsion and that vigorous stirring must be continued for a period of time, typically 10 minutes, to form the complex. The '725 patent also teaches that a water to fat ratio of 0.4:1 to 1.9:1 must be employed in order to form the emulsion. The '725 patent defines the emulsion as a fine emulsion containing fat globules having a size less than 40 micrometers.

DE 42 21 229 discloses a process where the emulsion is formed by propulsing the liquid fat and the cyclodextrin solution through one or two dyes, and the emulsion is lightly stirred.

### SUMMARY OF THE INVENTION

It has now been discovered that sterols and free fatty acids can be removed from liquefied animal fat without the need for vigorous stirring. More specifically, it has been found that vigorous stirring is not needed to form the emulsion. With minimal agitation, an oil-in-water emulsion comprising liquefied animal fat, water and cyclodextrin can be formed and this crude emulsion is sufficient to remove a substantial amount of the sterols/free fatty acids from the fat.

It has also been found that vigorous stirring is not necessary for complexation. In fact, it has been found that by moving the emulsion through a conduit for a period of 5 to 60 minutes that complexation occurs and that substantial amounts of sterols/free fatty acids are removed from the fat. Thus, the second step is accomplished without or, in the absence of, vigorous stirring.

It is both surprising and unexpected that the use of mild agitation will form the oil-in-water emulsion because the '725 patent teaches that vigorous stirring must be employed to form an efficient emulsion, efficient for removing substantial amounts of sterols/free fatty acids from the fat. Furthermore, it is surprising that complexation can occur without the need for vigorous stirring. In other words, the mere fact that the emulsion exists allows the complex to form and the sterols/free fatty acids to move from an uncomplexed state in the fat phase to a complexed state in the water phase.

It is hypothesized that the cyclodextrin remains in the aqueous phase after the formation of the emulsion and the complexation between the cyclodextrin and the sterols/free fatty acids takes place at the interface between the water and the fat. Thus, the cyclodextrin remains in the aqueous phase while the sterols/free fatty acids move from the fatty phase to the aqueous phase.

Furthermore, it has been found that a conventional pipeline arrangement employing pipes and pumps can be used to form the emulsion. This avoids the need for special mixing devices. The movement of the emulsion through the pipeline system allows for formation of the complex between the cyclodextrin and sterols/free fatty acids without the need for a special mixing device.

Additionally, it has been found that the water to fat weight ratio can be as high as about 5:1 while still obtaining good sterol/free fatty acid reduction. This high water to fat weight ratio provides several advantages. First, the viscosity of the emulsion is low, making the emulsion easier to handle. Second, a high water to fat ratio means increased amounts of cyclodextrin are available in the emulsion, contributing to an efficient removal of sterols/free fatty acids from the fat.

Furthermore, it has been found, quite unexpectedly, that the process of the present invention results in low residual cyclodextrin in the treated fat, typically, below about 5 ppm. Residual cyclodextrin is cyclodextrin which is present in the treated fat after the complex has been removed. Residual cyclodextrin is considered to be a contaminate which must be removed from the treated fat. Because the process of the present invention results in virtually no residual cyclodextrin, there is no need for a step to remove residual cyclodextrin from the treated fat. This also reduces the overall operating cost of the process of the present invention.

### BRIEF DESCRIPTION OF THE DRAWINGS

These and other aspects of the present invention may be more fully understood by reference to the following drawings wherein:
FIG. 1 illustrates a preferred embodiment of the overall process and apparatus of the present invention;
FIG. 2 illustrates a portion of a preferred embodiment of the present invention wherein the emulsion is formed by means of a tank equipped with an impeller;
FIG. 3 illustrates a portion of a preferred embodiment of the present invention herein the emulsion is formed by means of an in-line mixer; and
FIG. 4 illustrates a portion of a preferred embodiment of the present invention wherein the emulsion is formed by means of a Y adapter.

### DETAILED DESCRIPTION OF THE INVENTION

Broadly, the process of the present invention comprises the steps of:
(a) forming a uniform, milky white, oil-in-water emulsion in a mixing means in less than 30 seconds, said emulsion comprising liquefied animal fat, water and cyclodextrin wherein the water to fat weight ratio is 5:1 to 1:1 and said cyclodextrin is present in an amount of 3% to 10% by weight water, said water, liquefied fat and cyclodextrin having a residence time in said mixing means of less than 30 seconds, without introducing oxygen in the emulsion;
(b) moving said emulsion through a conduit for a period of 5 to 60 minutes so that complexes form between sterols and free fatty acids in said fat and said cyclodextrin without further agitation and without introducing oxygen; and
(c) separating said complexes from said fat wherein said fat has a reduced amount of sterol and free fatty acid and said fat has a low level of residual cyclodextrin.

In the first step, forming the emulsion, the cyclodextrin is added to the liquefied fat in the presence of water either by forming an aqueous slurry of cyclodextrin and then adding the aqueous slurry to the liquefied fat or by adding cyclodextrin to a composition of water and fat. Mixing the cyclodextrin with the fat in the absence of water produces poor results. It is most preferred to first form the aqueous slurry of cyclodextrin and then add the slurry of cyclodextrin to the fat.

The amount of cyclodextrin used in this process is 3% to 10% and, more preferably, 5% by weight of water. The cyclodextrin can be alpha-, beta-, gamma-cyclodextrins or mixtures thereof. Branched cyclodextrins as well as cyclodextrin derivatives can be used in the process of the present invention. The preferred cyclodextrin is beta-cyclodextrin.

The fats which are treated in accordance with the present invention are animal fats such as tallow, lard, chicken fat, fish oil, suet, and milk fat.

The water used in the present invention is conventional tap water.

The amount of water used in the present invention is 1 to 5 times the weight of fat and, more preferably, 2 to 4 times the weight of fat. This translates into a water to fat weight ratio of 5:1 to 1:1 and a preferred water to fat weight ratio of 2:1 to 4:1.

The fat must be in a liquid state prior to forming the emulsion. If the fat is a solid, then the fat must be heated to obtain a liquid. This can be done in a conventional manner using conventional equipment. In the case of tallow, the tallow is heated to a temperature of 40 to 60°C and, more preferably, 50°C.

Preferably, the emulsion is formed from the components which have been preheated such that the emulsion has a temperature of 50 to 60°C. Either a mixture of water and liquefied fat is preheated to 50 to 60°C and cyclodextrin added; or an aqueous slurry of cyclodextrin is preheated separately from the fat, which is also preheated to liquefy, then the two preheated liquids are combined. The preheating is conducted in a conventional manner using conventional equipment.

When the two components, fats and cyclodextrin slurry are preheated independent of each other, the aqueous cyclodextrin slurry is preheated to 50° to 70°C and, more preferably, 60°C. The fat is preheated to 40°C to 60°C and, more preferably, 50°C, so long as it is liquid at these temperatures.

The emulsion is formed by mixing the components together to produce a stable, uniform, milky white, oil-in-water emulsion. This emulsion must be stable at atmospheric conditions for a period of at least one minute. If the emulsion breaks into the individual components before one minute, then it is not stable and is not satisfactory for the present invention. Additionally, the emulsion should be uniform so that oil droplets are not visible to the naked eye. It has been found that this emulsion is formed by any conventional mixing means such as a tank with an impeller or an inline mixer and that the emulsion forms in a short period of time, less than one minute.

The conduit is preferably made of stainless steel to facilitate cleaning and sterilization, however, plastic pipe has been found to provide good results.

If necessary, additional pumps or mixing means can be positioned along the length of the conduit not only to move the emulsion through the conduit but also to maintain the emulsion.

Separation of the complexes which are formed is done in a conventional manner using conventional equipment. For example, centrifugation has yielded good results. If further purification of the fat is necessary, the fat is subjected to a second or more centrifugation steps.

After the complex has been separated from the fat, the complex is preferably heated to break the complex and recover the cyclodextrin. The recovered cyclodextrin is subsequently recycled to be used at the beginning of the process. To recover the cyclodextrin, the complex is suspended in water such that the weight ratio of water to complex is 99:1 to 4:1. The suspended complex is then agitated and heated to a temperature of 90°C to 100°C for a period of 5 to 15 minutes. The temperature is preferably maintained by continuous steam injection. This causes the cyclodextrin to separate from the complex; and subsequently, the cyclodextrin is recovered and recycled. More preferably, the suspended complex is heated to 95°C and the weight ratio of water to complex in the suspension is 20:1. The recovery of the cyclodextrin is done using conventional equipment, such as a centrifuge.

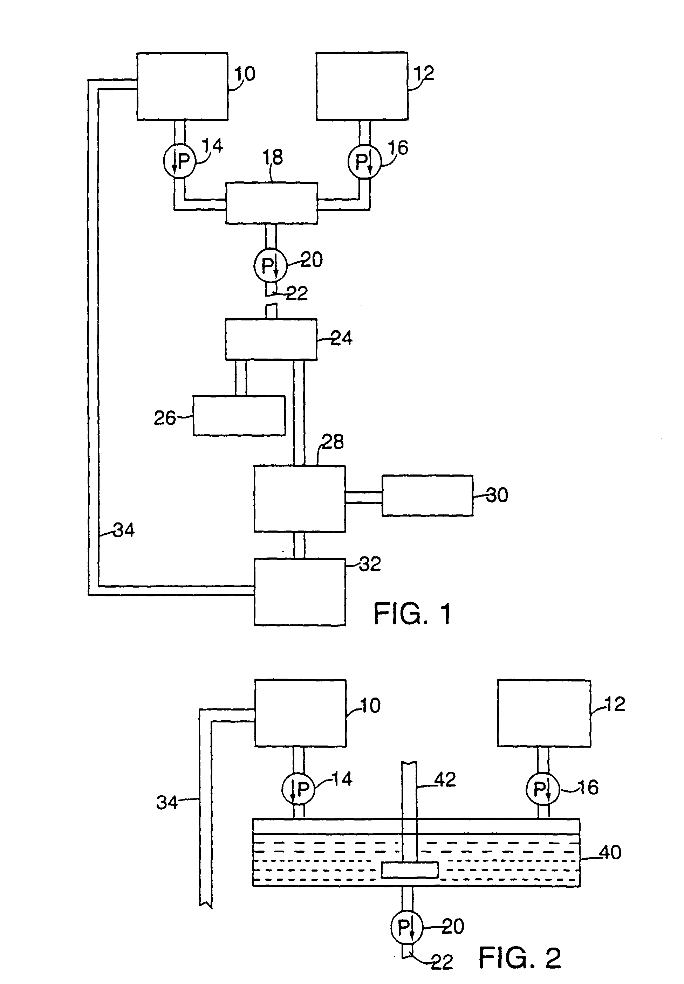

A preferred embodiment of the present invention is illustrated in Fig. 1. As shown in Fig. 1, the preferred process of the present invention employs two separate storage tanks 10 and 12 to preheat the components, first storage tank 10 is used to heat a water and cyclodextrin solution and second storage tank 12 is used to form and hold liquefied animal fat. These two tanks can be equipped with impellers to maintain the uniformity of their contents. From these two tanks, the contents are separately moved by pumps 14 and 16, respectively, to mixing means 18. Mixing means 18 mixes the two liquids and causes an oil-in-water emulsion to form. This emulsion is then moved by pump 20 through conduit 22 for a period of 5 to 60 minutes.

To separate the water phase from the fat phase, the emulsion is subject to centrifuge 24 and the fat component is separated into tank 26. The water phase is moved to tank 28 where additional water from tank 30 is added. The water phase is a fairly concentrated aqueous slurry of complexed cyclodextrin and sterol/free fatty acid. The aqueous slurry of complex is then heated in tank 32 to break the complex into its individual components. The separated cyclodextrin is collected and recycled through conduit 34.

It has been found that the emulsion, once formed, remains stable without the need for further agitation when the emulsion is moved through the conduit in accordance with the present invention. Complexes form between the cyclodextrin and the sterols and free fatty acids during the time the emulsion moves through the conduit. The residence time of the emulsion in the conduit is 5 to 60 minutes and, more preferably, 5 to 20 minutes.

Both the flow rate and the size of the conduit have been found not to be critical to the present invention. Good results have been obtained by using a pipe having an inside diameter of 2 inches (5 cm.) and a flow rate of 2 to 10 gallons/minute (5 to 40 liters/minute).

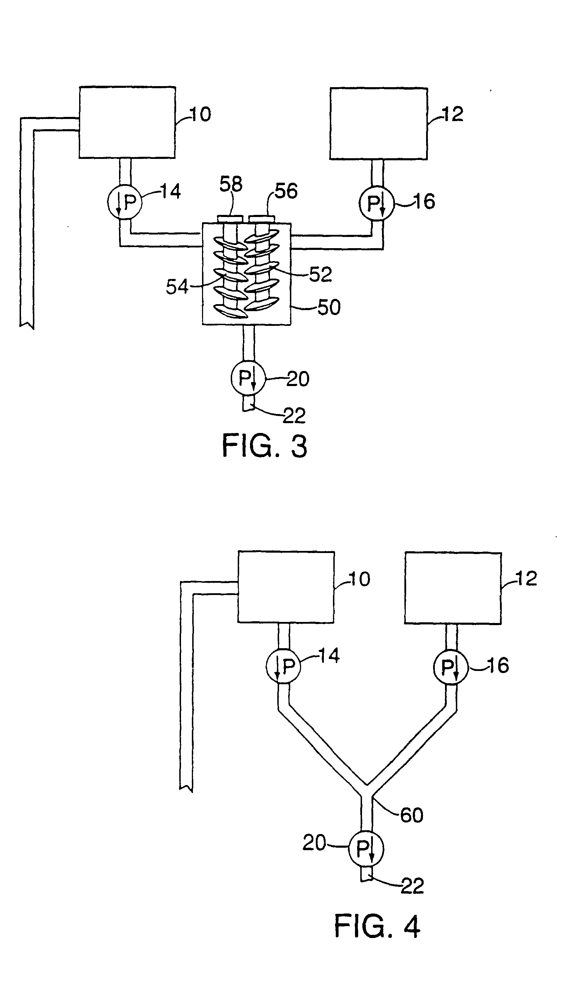

The mixing means for use in accordance with the present invention can be any conventional mixing means. An example of such a mixing means is a conventional tank equipped with a liner for heating and an impeller for mixing. Fig. 2 illustrates tank 40 equipped with an impeller 42. Such tanks are often referred to as agitation vessels and are sized to provide the proper conditions for forming the emulsion. Another example of the mixing means includes an in-line mixer as shown in Fig. 3. In-line mixer 50 is equipped with two screws 52, 54 which are rotated in opposite direction by their respective motors 56 and 58. Another mixing means is shown in Fig. 4. Y adapter 60 is used to mix the two liquids. Other conventional mixing means can be employed in accordance with the present invention, to include static-in-line mixers; helical blade mixers; orifice and mixing nozzles; and liquid pumps, especially shear pumps.

The emulsion forms in a very short period of time, less than 0.5 minute, in the mixing means. The residence time of the combined water, liquefied fat and cyclodextrin in the mixing means is less than one minute and, more preferably, less than 30 seconds. As will be appreciated, the residence time in the mixing means is dependent in part on the flow rate of the liquids through the pipeline system.

The mixing means and the whole pipeline system used in the present invention should not introduce oxygen into the system or any other gas which will damage the liquefied fat. As is appreciated by those of skill in the art, the treatment time of the process in accordance with the present invention is so short that air in the system will not damage the liquefied fat, however, it is preferred that no oxygen be introduced into the system. For example, tank 40 is shown with a closed, airtight lid.

These and other aspects of the present invention may be more fully understood by reference to one or more of the following examples.

### EXAMPLE 1

This example illustrates the poor results obtained when the cyclodextrin is added to liquefied fat in the absence of water.

Beta-cyclodextrin (5% by weight) was added to tallow and the mixture was preheated to 50°C. Water (50°C) was subsequently added at a 10:1 weight ratio relative to the fat. The mixture was maintained at 50°C and stirred at medium setting with a Corning PC-351 magnetic stirrer for three hours. The complex was separated from the fat by centrifuging the mixture at 6,000 rpm for 10 minutes at 40°C. The fat layer was collected as the product and tested for cholesterol. The cholesterol content of the tallow was reduced by 13%.

As can be seen, the additional water after the addition of cyclodextrin produced poor results.

### EXAMPLE 2

This example illustrates the results obtained when following the teachings of U.S. Patent 5,232,725.

Lard was mixed with an equal weight of water and preheated to 50°C. Beta-cyclodextrin was added at 5% by weight relative to the fat. The mixture was stirred for two hours at 1,500 rpm using a LIGHTNIN® LABMASTER™ fitted with a A100 impeller. The product was centrifuged at 6,000 rpm for 10 minutes at 40°C. The fat layer was collected as the product. The cholesterol content of the lard was reduced by 96%.

### EXAMPLE 3

This example illustrates the '725 patent wherein the magnetic stirrer of Example 1 above was employed.

The process of Example 2 above was employed except that the Corning PC-351 magnetic stirrer set at a medium speed setting was used in place of the impeller. The amount of cholesterol was reduced by 98%.

### EXAMPLE 4

This example illustrates the detrimental effect of stirring too vigorously.

The process of Example 2 above was employed, except that the mixing was conducted using a WARING commercial blender set on its highest mixing speed. This provides an extremely high shear mixing. The cholesterol content of the lard was reduced by only 38%.

### EXAMPLE 5

This example illustrates that low speed mixing provides good results.

Tallow was mixed with an equal weight of water and preheated to 55°C. Beta-cyclodextrin was added at 5% by weight relative to the fat. The mixture was stirred for one and one-half hours at 300 rpm using a LIGHTNIN® LABMASTER™ fitted with a A100 impeller. The mixture was centrifuged at 6,000 rpm for 10 minutes at 40°C. The fat layer was collected as the product. The experiment was performed in triplicate and resulted in an average cholesterol reduction of 70%.

As can be seen, low speed mixing produces good results.

### EXAMPLE 6

This example illustrates a short mixing time coupled with vigorous stirring.

The process of Example 2 above was repeated except the treatment time was lowered to 10 minutes, tallow was used in place of lard and the water tallow mix was heated to 55°C before the addition of the cyclodextrin. The tallow had its cholesterol content reduced by 71%.

### EXAMPLE 7

This example illustrates an even shorter treatment time than employed in Example 6 above.

Tallow and a 5% by weight aqueous solution of beta-cyclodextrin were heated separately to 55°C and then combined to have a water to fat weight ratio of 1:1. They were mixed in apparatus of Example 6 above at a speed of 1500 rpm for five (5) minutes, half the time of Example 6 above. The resulting emulsion was then centrifuged as in Example 6 and the separated fat component tested for cholesterol content. It was found that the cholesterol was reduced by 35-38%.

Thus, decreasing the treatment time by half also decreased the cholesterol reduction by about half when using a tank equipped with an impeller and using a high speed mixing process.

### EXAMPLE 8

This example illustrates the results from Example 5 above employing a different mixing means, a fermenter rather than a Lightnin Labmaster.

One hundred (100) pounds (45 Kg) of tallow and one hundred pounds (45 Kg) of water were placed into a fermenter (tank equipped with an impeller). Five pounds (2.25 Kg) of beta-cyclodextrin was added to the water and tallow. The contents of the tank were rapidly heated to 55°C while being stirred at a rate of 300 rpm. The stirring continued for one and one-half hours. The mixture was then centrifuged at 6,000 rpm for 10 minutes at 40°C. The fat layer was collected as product. The cholesterol content of the tallow was reduced by 70%.

As can be seen by comparing the results of this example with the results of Example 5 above, there is essentially no difference as to when the components are heated.

### EXAMPLE 9

This example illustrates that a short treatment time is preferred and that good centrifugation improves results.

The process of Example 8 above was employed except that a shorter treatment was employed and that the product was centrifuged twice.

| Treatment Time (minutes) | % Cholesterol Reduction |
|---|---|
| 10 | 90 |
| 60 | 90 |
| 90 | 94 |

As can be seen, a shorter treatment time (10 minutes) produced the same results as a longer treatment time (60 minutes) and that good centrifugation produced better results, compare 90 minutes, 90% cholesterol reduction with 90 minutes, 70% cholesterol reduction in Example 5 above.

### EXAMPLE 10

This example illustrates using a static in-line mixer as the mixing means and a conduit in accordance with the present invention.

Tallow and a 5% (by weight) aqueous solution of beta-cyclodextrin were individually preheated to 55°C. The two liquids were simultaneously pumped into a static in-line mixer at a water to fat weight ratio of 1:1 to form the emulsion. After the emulsion was formed, it was moved through a pipe measuring 73 inches (185 cm) in length and having an inside diameter of two inches (5 cm). The flow rate through the static in-line mixer and the pipe was 1.2 liters/min. Treatment time varied by collecting the emulsion as it exited from the pipe and pumping it back through the in-line mixer and 73 inches (185 cm) of pipe. The different samples as listed below were centrifuged at 6,000 rpm for 10 minutes at 40°C. The fat layer was collected as the product. The results of this test are listed below:

| Treatment Time (minutes) | Passes through the System | % Cholesterol Reduction |
|---|---|---|
| 5 | 1 | 46 |
| 10 | 2 | 60 |
| 20 | 4 | 68 |
| 30 | 6 | 80 |
| 60 | 12 | 84 |

The emulsion was stable throughout the 60 minutes of testing. As can be seen, there is no need for constant, vigorous stirring to either form or maintain the emulsion.

### EXAMPLE 11

This example illustrates using the process of Example 10 above except that the flow rate was increased to 3.1 liters/min. The results are listed below.

| Treatment Time (minutes) | Passes through the System | % Cholesterol Reduction |
|---|---|---|
| 3 | 2 | 66 |
| 5 | 3 | 71 |
| 10 | 6 | 69 |
| 20 | 12 | 73 |
| 30 | 18 | 71 |
| 60 | 32 | 78 |

### EXAMPLE 12

This example illustrates using the process of Example 10 above except that the temperature was raised to 65°C. The results are listed below.

| Treatment Time (minutes) | Passes through the System | % Cholesterol Reduction |
|---|---|---|
| 3 | 2 | 75 |
| 5 | 3 | 74 |
| 10 | 6 | 76 |
| 20 | 12 | 86 |
| 30 | 18 | 85 |
| 60 | 32 | 85 |

As can be seen, increasing the temperature had some impact on the decholesterolization.

### EXAMPLE 13

This example illustrates using the process of Example 10 above except that the concentration of beta-cyclodextrin in the aqueous solution was increased to 10%. The results are shown below.

| Treatment Time (minutes) | Passes through the System | % Cholesterol Removed |
|---|---|---|
| 3 | 2 | 64 |
| 5 | 3 | 80 |
| 10 | 6 | 87 |
| 20 | 12 | 86 |
| 30 | 18 | 84 |
| 60 | 32 | 72 |

As can be seen, increasing the cyclodextrin concentration increased the decholesterolization.

### EXAMPLE 14

This example illustrates using the procedure of Example 10 above except the in-line mixer was replaced with a Y adapter as shown in Fig. 4. It was found that the emulsion formed when the two components, aqueous beta-cyclodextrin slurry and liquefied tallow, joined at a "Y" in the pipe. Additionally, six more feet (183 cm) of two inch (5 cm) inside diameter tubing was added onto the 73 inches (185 cm) of tubing to make a total of just over 12 feet (3.6 m) of piping. As in Example 9, the emulsion was collected at the end of the tubing and then pumped back through one branch of the Y adapter and the 12 feet (3.6 m) of tubing. In this way, the treatment time was varied. The results are listed below.

| Treatment Time (minutes) | Passes through the System | % Cholesterol Removed |
|---|---|---|
| 3 | 1 | 52 |
| 10 | 3 | 57 |
| 20 | 6 | 58 |
| 45 | 15 | 76 |

The emulsion is a stable throughout the treatment. The Y adapter provided a good mixing means for the two liquid components, providing results which are similar to the results obtained with an in-line static mixer.

### EXAMPLE 15

This example illustrates the process of the present invention wherein a longer conduit is employed.

Tallow and a 5% (by weight) aqueous solution of beta-cyclodextrin were preheated to 55°C. The two liquids were simultaneously pumped through the in-line mixer of Example 10 above and then into a 200 ft. (60 m) long, two inch (5 cm) inside diameter tube (the 73 inches (185 cm) of tubing had been replaced with 200 feet (60 m) of tubing). The tubing was in a serpentine arrangement. A shear pump was positioned at the end of the tubing to provide additional mixing and pumping. The weight ratio of water to fat was 4:1 and the flow rate through the system was 18.9 liters/min. The material collected after one pass through the system was centrifuged as before to obtain product. The emulsion residence time in the conduit was 25 minutes.

| Sample Description | % Cholesterol Reduction |
|---|---|
| Before shear pump | 77 |
| After shear pump | 88 |

The emulsion was stable throughout the time it was in the pipe. As can be seen, this example produced comparable results to Examples 10 and 11 at a treatment time of 25 minutes.

### EXAMPLE 16

This example illustrates the process of Example 15 above at a water to fat ratio of 1:1 and with increased treatment time.

| Sample Description | % Cholesterol Reduction | Total Treatment Time (minutes) |
|---|---|---|
| Before Shear Pump | 51 | 25 |
| After Shear Pump | 70 | 25 |
| Recirculated 10 minutes | 77 | 35 |
| Recirculated 20 minutes | 79 | 45 |

The before shear pump measurement was the average of two runs.

As can be seen, lowering the water to fat ratio produced poor results and required a greater treatment time to obtain comparable results to those obtained in Example 15 above.

### EXAMPLE 17

This example illustrates that placing additional mixing means in the conduit does not substantially increase the reduction of cholesterol in the fat.

Tallow and a 5% (by weight) aqueous solution of beta-cyclodextrin were preheated to 55°C. The two liquids were simultaneously pumped into a Y adapter and then through approximately 10 feet (3 m) of 2 inch (5 cm) inside diameter tubing. The weight ratio of water to fat was 1:1. A shear pump was placed at the end of the tubing and the emulsion was collected after it passed through the shear pump. In order to simulate a shear pump every 10 feet (3 m) in the conduit, the emulsion was repeatedly collected after the shear pump and then passed back through the system. Flow rate through the system was 18.5 liters/min. The mixture was recirculated through the system for the amount of time listed below. The final mixture was centrifuged and the fat layer was collected as a product.

| Sample Description | % Cholesterol Removed | Total Treatment Time (minutes) | Passes through the System |
|---|---|---|---|
| Before Shear Pump | 12 | 2 | 1 |
| After Shear Pump | 57 | 2 | 1 |
| Recirculated 10 minutes | 78 | 12 | 6 |
| Recirculated 20 minutes | 64 | 22 | 11 |

As can be seen, having a mixing means every 10 feet (3 m) in the conduit did not substantially increase the cholesterol reduction.

### EXAMPLE 18

This example illustrates that increasing the flow rate using the apparatus of Example 17 does not increase the cholesterol reduction.

The process employed in this example is identical to the process in Example 17 except the flow rate was doubled, 37.9 liters/min. The results are listed below.

| Sample Description | % Cholesterol Reduction | Total Treatment Time (minutes) |
|---|---|---|
| Before Shear Pump | 11 | 1 |
| After Shear Pump | 24 | 1 |

### EXAMPLE 19

This example illustrates that increased turbulence does not increase the cholesterol reduction.

The process employed in this example is identical to Example 17 except that a high speed shear pump replaced the shear pump used in Example 17.

| Sample Description | % Cholesterol Removed | Total Treatment Time (minutes) | Passes through the System |
|---|---|---|---|
| Before Shear Pump | 9 | 2 | 1 |
| After Shear Pump | 26 | 2 | 1 |
| Recirculated 10 minutes | 55 | 12 | 6 |
| Recirculated 20 minutes | 62 | 22 | 11 |

### EXAMPLE 20

This example illustrates the process of Example 15 except that the in-line mixer was replaced with a shear pump and the water to fat ratio was 1:1. In other words, a shear pump is used as the mixing means.

Tallow and a 5% (by weight) aqueous solution of beta-cyclodextrin were preheated to 55°C. The two liquids were simultaneously pumped into the shear pump to mix the two liquids and through a 200 ft. (60 m) long, two inch (5 cm) diameter tube arranged in a serpentine arrangement. The weight ratio of water to fat was 1:1. The mixture was recirculated through the system for the amount of time listed below. The final mixture was centrifuged and the fat layer was collected as the product.

| Sample Description | % Cholesterol Removed | Total Treatment Time (minutes) |
|---|---|---|
| First Pass | 53 | 25 |
| Fourth Pass | 82 | 100 |

As can be seen, these results are comparable to Example 16 above where the water to fat ratio was 1:1.

### EXAMPLE 21

This example illustrates using the apparatus of Example 20 above wherein a Y adapter is used to replace the shear pump as the mixing means.

The treatment time was the same as one pass through the system, 25 minutes, however, the cholesterol reduction was 37%.

### EXAMPLE 22

This example illustrates an increase of the beta-cyclodextrin concentration to 10% at a water to fat ratio of 1:1.

The process of Example 21 was repeated except that the concentration of beta-cyclodextrin in the aqueous slurry was 10%. After the fourth pass through the system (100 minutes treatment time) the cholesterol reduction was 69%.

### EXAMPLE 23

This example illustrates that better results are obtained with a higher water to fat ratio.

The process of Example 20 above was repeated except that the water to fat ratio was 2:1.

| Sample Description | % Cholesterol Removed | Total Treatment Time (minutes) |
|---|---|---|
| First Pass | 84 | 25 |
| Recirculated 20 minutes | 91 | 45 |

As can be seen, increasing the water to fat weight ratio to 2:1 increases the cholesterol reduction.

## Claims

1. A process for reducing sterols and free fatty acids from animal fat using a high water to fat ratio comprising the steps of:
(a) forming a uniform, milky white, oil-in-water emulsion in a mixing means in less than 30 seconds at a temperature of 50°C to 60°C, said emulsion comprising liquefied animal fat, water and cyclodextrin wherein the water to fat weight ratio is 5:1 to 2:1 and said cyclodextrin is present in an amount of 3% to 10% by weight of water, said water, liquefied fat and cyclodextrin having a residence time in said mixing means of less than 30 seconds without introducing oxygen into the emulsion;
(b) moving said emulsion through a conduit for a period of 5 to 60 minutes so that complexes form between the cyclodextrin and said free fatty acids and said sterols in said animal fat without further agitation and without introducing oxygen into the emulsion in the conduit; and
(c) separating said complexes from said fat such that said fat has a reduced content of sterol and fatty acids.

2. The process of claim 1 wherein said emulsion is moved through said conduit for a period of 5 to 30 minutes, preferably 5 to 20 minutes.

3. The process of claim 1 wherein said emulsion is moved through said conduit by means of a pump.

4. The process of claim 1 wherein said emulsion is formed by the steps of:
(a1) mixing cyclodextrin and water to form a slurry wherein said cyclodextrin is present in an amount of 3% to 10% by weight of water;
(a2) heating said slurry to 50°C to 70°C;
(a3) heating animal fat to a temperature of 40°C to 60°C so as to liquefy the animal fat;
(a4) pumping said heated slurry into said conduit;
(a5) pumping said liquefied animal fat into said conduit such that it mixes with said heated slurry and forms said emulsion.

5. The process of claim 1 wherein said emulsion is formed by first mixing said water and liquefied fat together and then further mixing said cylcodextrin into said liquefied fat and water.

6. The process of claim 1 wherein said cyclodextrin is beta cyclodextrin.

7. The process of claim 1 wherein the separation step is accomplished by means of centrifugation.

8. The process of claim 1 further comprising the steps of suspending the separated complex in water such that the weight ratio of water to complex is 99:1 to 4:1; agitating and heating the suspended complex to a temperature of 90°C to 100°C for a period of 5 to 15 minutes to separate the cyclodextrin from the complex and subsequently recovering the cyclodextrin.

9. The process of claim 8 wherein the suspended complexes heated to 95°C and the weight ratio of water to complex in the suspension is 20:1.

10. The process of claim 1 wherein said animal fat is selected from the group consisting of tallow, lard, chicken fat, fish oil, suet and milk fat.

11. The process of claim 1 wherein said emulsion is formed by the steps of:
(a1) mixing cyclodextrin and water to form a slurry wherein said cyclodextrin is present in an amount of 3% to 10% by weight of water;
(a2) heating said slurry to a temperature of 50°C to 70°C;
(a3) heating animal fat to a temperature of 40°C to 60°C so as to liquefy the animal fat;
(a4) pumping said heated slurry into a first conduit;
(a5) pumping said liquefied animal fat into a second conduit;
(a6) joining said heating slurry in said first conduit with said liquefied animal fat in said second conduit in an in-line mixer such that a uniform, milky white, oil-in-water emulsion is formed in less than 30 seconds, said emulsion comprising liquefied animal fat, water and cyclodextrin wherein the water to fat weight ratio is 5:1 to 2:1; and
(a7) wherein said emulsion is moved through a third conduit which is contacted to said in-line mixer.

12. The process of claim 1 wherein said emulsion is formed by steps of:
(a1) mixing cyclodextrin and water to form a slurry wherein said cyclodextrin is present in an amount of 3% to 10% by weight of water;
(a2) heating said slurry to a temperature of 50°C to 70°C;
(a3) heating animal fat to a temperature of 40°C to 60°C so as to liquefy the animal fat;
(a4) pumping said heated slurry into a first conduit;
(a5) pumping said liquefied animal fat into a second conduit;
(a6) joining said heating slurry in said first conduit with said liquefied animal fat in said second conduit in a Y-adapter such that a uniform, milky white, oil-in-water emulsion is formed in less than 30 seconds, said emulsion comprising liquefied animal fat, water and cyclodextrin wherein the water to fat weight ratio is 5:1 to 2:1; and
(a7) wherein said emulsion is moved through a third conduit which is contacted to said Y-adapter.

13. The process of claim 1 wherein the water to fat weight ratio is 2:1 to 4:1.

14. The process of claim 1 wherein the water to fat weight ratio is 2:1.

## Patentansprüche

1. Verfahren zur Verringerung von Sterolen und freien Fettsäuren in Tierfett unter Verwendung eines hohen Wasser-zu-Fett-Verhältnisses, das die folgenden Schritte umfasst:
(a) Ausbildung einer gleichförmigen milchigweissen Öl-in-Wasser-Emulsion in einer Mischvorrichtung in weniger als 30 Sekunden bei einer Temperatur von 50-60°C, die Emulsion umfasst verflüssigtes Tierfett, Wasser und Cyclodextrin, worin das Wasser-zu-Fett-Verhältnis 5:1-2:1 beträgt, und das Cyclodextrin in einer Menge von 3-10 Gew.% des Wassers vorhanden ist, und das Wasser, das verflüssigte Fett und das Cyclodextrin weisen eine Aufenthaltszeit in der Mischvorrichtung von weniger als 30 Sekunden auf, ohne dass Sauerstoff in die Emulsion eingeführt wird;
(b) Hindurchbewegen der Emulsion durch eine Leitung für einen Zeitraum von 5-60 Minuten, so dass zwischen dem Cyclodextrin und den freien Fettsäuren und den Sterolen in dem Tierfett Komplexe gebildet werden, ohne dass weiter gerührt wird und ohne Einführung von Sauerstoff in die Emulsion in der Leitung; und
(c) Abtrennen der Komplexe von dem Fett, so dass das Fett einen verringerten Gehalt an Sterol und Fettsäuren aufweist.

2. Verfahren gemäss Anspruch 1, worin die Emulsion für einen Zeitraum von 5-30 Minuten, vorzugsweise 5-20 Minuten, durch die Leitung hindurchbewegt wird.

3. Verfahren gemäss Anspruch 1, worin die Emulsion mittels einer Pumpe durch die Leitung bewegt wird.

4. Verfahren gemäss Anspruch 1, worin die Emulsion durch die folgenden Schritte gebildet wird:
(a1) Vermischen von Cyclodextrin und Wasser unter Ausbildung einer Aufschlämmung, worin das Cyclodextrin in einer Menge von 3-10 Gew.% des Wassers vorhanden ist;
(a2) Erwärmen der Aufschlämmung auf 50-70°C;
(a3) Erwärmen von Tierfett auf eine Temperatur von 40-60°C, so dass das Tierfett verflüssigt wird;
(a4) Einpumpen der erwärmten Aufschlämmung in die Leitung; und
(a5) Einpumpen des verflüssigten Tierfettes in die Leitung in einer solchen Weise, dass es sich mit der erwärmten Aufschlämmung vermischt und die Emulsion bildet.

5. Verfahren gemäss Anspruch 1, worin die Emulsion gebildet wird durch Vermischen des Wassers mit dem verflüssigten Fett und anschliessende Beimischung des Cyclodextrins in das verflüssigte Fett und Wasser.

6. Verfahren gemäss Anspruch 1, worin das Cyclodextrin β-Cyclodextrin ist.

7. Verfahren gemäss Anspruch 1, worin der Trennschritt durch Zentrifugieren bewirkt wird.

8. Verfahren gemäss Anspruch 1, das ferner die Schritte des Suspendierens des abgetrennten Komplexes in Wasser in einer solchen Weise, dass das Gewichtsverhältnis von Wasser zu Komplex 99:1-4:1 beträgt; Rühren und Erwärmen des suspendierten Komplexes auf eine Temperatur von 90-100°C für einen Zeitraum von 5-15 Minuten zur Abtrennung des Cyclodextrins aus dem Komplex, und die anschliessende Rückgewinnung des Cyclodextrins umfasst.

9. Verfahren gemäss Anspruch 8, worin die suspendierten Komplexe auf 95°C erwärmt werden und das Gewichtsverhältnis von Wasser zu Komplex in der Suspension 20:1 beträgt.

10. Verfahren gemäss Anspruch 1, worin das Tierfett ausgewählt ist aus Talg, Schmalz, Hühnerfett, Fischöl, Rindertalg und Milchfett.

11. Verfahren gemäss Anspruch 1, worin die Emulsion durch die folgenden Schritte gebildet wird:
(a1) Vermischen von Cyclodextrin und Wasser unter Ausbildung einer Aufschlämmung, worin das Cyclodextrin in einer Menge von 3-10 Gew.% des Wassers vorhanden ist;
(a2) Erwärmen der Aufschlämmung auf 50-70°C;
(a3) Erwärmen von Tierfett auf eine Temperatur von 40-60°C, so dass das Tierfett verflüssigt wird;
(a4) Einpumpen der gesamten Aufschlämmung in eine erste Leitung;
(a5) Einpumpen des verflüssigten Tierfettes in eine zweite Leitung;
(a6) Vereinigen der erwärmten Aufschlämmung in der ersten Leitung mit dem verflüssigten Tierfett in der zweiten Leitung in einem In-line-Mischer, so dass eine gleichförmige milchig-weisse Öl-in-Wasser-Emulsion in weniger als 30 Sekunden gebildet wird, die Emulsion umfasst verflüssigtes Tierfett, Wasser und Cyclodextrin, worin das Wasser-zu-Fett-Verhältnis 5:1-2:1 beträgt; und
(a7) Bewegen der Emulsion durch eine dritte Leitung, die mit dem In-line-Mischer in Kontakt steht.

12. Verfahren gemäss Anspruch 1, worin die Emulsion durch die folgenden Schritte gebildet wird:
(a1) Vermischen von Cyclodextrin und Wasser unter Ausbildung einer Aufschlämmung, worin das Cyclodextrin in einer Menge von 3-10 Gew.% des Wassers vorhanden ist;
(a2) Erwärmen der Aufschlämmung auf 50-70°C;
(a3) Erwärmen von Tierfett auf eine Temperatur von 40-60°C, so dass das Tierfett verflüssigt wird;
(a4) Einpumpen der gesamten Aufschlämmung in eine erste Leitung;
(a5) Einpumpen des verflüssigten Tierfettes in eine zweite Leitung;
(a6) Vereinigen der erwärmten Aufschlämmung in der ersten Leitung mit dem verflüssigten Tierfett in der zweiten Leitung in einem Y-Adapter, so dass eine gleichförmige milchig-weisse Öl-in-Wasser-Emulsion in weniger als 30 Sekunden gebildet wird, die Emulsion umfasst verflüssigtes Tierfett, Wasser und Cyclodextrin, worin das Wasser-zu-Fett-Verhältnis 5:1-2:1 beträgt; und
(a7) Bewegen der Emulsion durch eine dritte Leitung, die mit dem Y-Adapter in Kontakt steht.

13. Verfahren gemäss Anspruch 1, worin das Wasser-zu-Fett-Verhältnis 2:1-4:1 beträgt.

14. Verfahren gemäss Anspruch 1, worin das Wasser-zu-Fett-Verhältnis 2:1 beträgt.

## Revendications

1. Procédé pour la réduction du taux de stérols et d'acides gras libres dans la graisse animale en utilisant un rapport eau sur graisse élevé, comprenant les étapes consistant à :
(a) former une émulsion huile dans eau, uniforme, d'un blanc laiteux, dans un moyen pour mélanger en moins de 30 secondes à une température de 50°C à 60°C, ladite émulsion comprenant une graisse animale liquéfiée, de l'eau et de la cyclodextrine, où le rapport en masse de l'eau à la graisse est de 5:1 à 2:1, et ladite cyclodextrine est présente en une quantité de 3 % à 10 % en masse par rapport à l'eau, lesdites eau, graisse liquéfiée et cyclodextrine ayant un temps de séjour dans ledit moyen pour mélanger de moins de 30 secondes, sans introduire d'oxygène dans l'émulsion ;
(b) propulser ladite émulsion à travers un conduit, pendant une durée de 5 à 60 minutes, de telle façon que des complexes se forment entre la cyclodextrine et lesdits acides gras libres et lesdits stérols dans ladite graisse animale sans agitation supplémentaire ni introduction d'oxygène dans l'émulsion dans le conduit ; et
(c) séparer lesdits complexes de ladite graisse de telle façon que ladite graisse ait un taux de stérols et d'acides gras réduit.

2. Procédé selon la revendication 1, dans lequel ladite émulsion est déplacée à travers ledit conduit pendant une durée de 5 à 30 minutes, de préférence de 5 à 20 minutes.

3. Procédé selon la revendication 1, dans lequel ladite émulsion est déplacée à travers ledit conduit au moyen d'un pompe.

4. Procédé selon la revendication 1, dans lequel ladite émulsion est formée par les étapes consistant à :
(a1) mélanger de la cyclodextrine et de l'eau pour former une suspension dans laquelle ladite cyclodextrine est présente en une quantité de 3 % à 10 % en masse par rapport à l'eau ;
(a2) chauffer ladite suspension de 50°C à 70°C ;
(a3) chauffer la graisse animale à une température de 40°C à 60°C de façon à liquéfier la graisse animale ;
(a4) pomper ladite suspension chauffée dans ledit conduit ;
(a5) pomper ladite graisse animale liquéfiée dans ledit conduit de telle façon qu'elle se mélange à ladite suspension chauffée et forme ladite émulsion.

5. Procédé selon la revendication 1, dans lequel ladite émulsion est formée d'abord par mélange, l'une avec l'autre, desdites eau et graisse liquéfiée, puis par mélange supplémentaire de ladite cyclodextrine avec lesdites graisse liquéfiée et eau.

6. Procédé selon la revendication 1, dans lequel ladite cyclodextrine est la béta-cyclodextrine.

7. Procédé selon la revendication 1, dans lequel l'étape de séparation est réalisée au moyen d'une centrifugation.

8. Procédé selon la revendication 1, comprenant en outre les étapes de mise en suspension du complexe séparé dans l'eau de telle façon que le rapport en masse de l'eau au complexe est de 99:1 à 4:1 ; d'agitation et de chauffage du complexe en suspension à une température de 90°C à 100°C pendant une durée de 5 à 15 minutes pour séparer la cyclodextrine du complexe et ensuite de récupération de la cyclodextrine.

9. Procédé selon la revendication 8, dans lequel les complexes en suspension sont chauffés à 95°C et le rapport en masse de l'eau au complexe dans la suspension est de 20:1.

10. Procédé selon la revendication 1, dans lequel ladite graisse animale est choisie dans le groupe constitué par le suif, le saindoux, la graisse de poulet, la graisse de poisson, la graisse de rognon et la matière grasse du lait.

11. Procédé selon la revendication 1, dans lequel ladite émulsion est formée par les étapes consistant à :
(a1) mélanger de la cyclodextrine et de l'eau pour former une suspension dans laquelle ladite cyclodextrine est présente en une quantité de 3 % à 10 % en masse par rapport à l'eau ;
(a2) chauffer ladite suspension à une tempéraure de 50°C à 70°C ;
(a3) chauffer de la graisse animale à une température de 40°C à 60°C de façon à liquéfier la graisse animale ;
(a4) pomper ladite suspension chauffée dans un premier conduit ;
(a5) pomper ladite graisse animale liquéfiée dans un second conduit ;
(a6) combiner ladite suspension chauffée dans ledit premier conduit avec ladite graisse animale liquéfiée dans ledit second conduit dans un mélangeur en ligne de telle façon que se forme une émulsion huile dans eau en moins de 30 secondes, ladite émulsion comprenant de la graisse animale liquéfiée, de l'eau et de la cyclodextrine, où le rapport en masse de l'eau à la graisse est de 5:1 à 2:1, et
(a7) dans lequel ladite émulsion étant ensuite déplacée à travers un troisième conduit relié audit mélangeur en ligne.

12. Procédé selon la revendication 1, dans lequel ladite émulsion est formée par les étapes consistant à :
(a1) mélanger de la cyclodextrine et de l'eau pour former une suspension dans laquelle ladite cyclodextrine est présente en une quantité de 3 % à 10 % en masse par rapport à l'eau ;
(a2) chauffer ladite suspension à une température de 50°C à 70°C ;
(a3) chauffer de la graisse animale à une température de 40°C à 60°C de façon à liquéfier la graisse animale ;
(a4) pomper ladite suspension chauffée dans un premier conduit ;
(a5) pomper ladite graisse animale liquéfiée dans un second conduit ;
(a6) combiner ladite suspension chauffée dans ledit premier conduit avec ladite graisse animale liquéfiée dans ledit second conduit dans un adaptateur en Y de telle façon que se forme une émulsion huile dans eau, uniforme, d'un blanc laiteux, en moins de 30 secondes, ladite émulsion comprenant de la graisse animale liquéfiée, de l'eau et de la cyclodextrine, où le rapport en masse de l'eau à la graisse est de 5:1 à 2:1, et
(a7) dans lequel ladite émulsion étant ensuite déplacée à travers un troisième conduit relié audit adaptateur en Y.

13. Procédé selon la revendication 1, dans lequel le rapport en masse eau sur graisse est de 2:1 à 4:1.

14. Procédé selon la revendication 1, dans lequel le rapport en masse eau sur graisse est de 2:1.
